# EUROPEAN PATENT SPECIFICATION

(11) **EP 0 516 755 B1**
(45) Date of publication and mention of the grant of the patent: **02.05.1997**
(21) Application number: 91906214.1
(22) Date of filing: 14.02.1991
(51) Int. Cl.: A43B 21/00

(54) **SHOE WITH IMPROVED DUAL HARDNESS HEEL-LIFT**
SCHUH MIT ABSATZFLECK MIT ZWEI HÄRTEN
CHAUSSURE A BONBOUT AMELIORE ET A DOUBLE DURETE

(30) Priority: 20.02.1990 US 482249; 18.07.1990 US 555079
(43) Date of publication of application: 09.12.1992
(73) Proprietor: Nine West Group Inc., Stamford, Connecticut 06902 (US)
(72) Inventor: LOCK, Barry, W., Sullivan, MO 63080 (US); SCHOLL, William, J., St. Louis, MO 63146 (US)
(74) Representative: Chettle, Adrian John
(86) International application number: US9101014
(87) International publication number: WO9112741

(56) References cited:
- EP-A- 419 317
- AT-A- 239 681
- DE-U- 8 807 616
- FR-A- 1 176 647
- FR-E- 75 287
- GB-A- 410 461
- US-A- 2 908 089
- US-A- 2 990 627
- US-A- 3 034 234
- US-A- 3 035 358
- US-A- 3 144 722
- US-A- 3 174 235
- US-A- 3 216 133
- US-A- 3 261 115

## Description

### Technical Field

The invention relates to women's casual and dress shoes, but does not relate to athletic shoes. The invention focuses on the heel-lift portion of the heel, and more particularly a dowel-lift. A heel-lift is disposed at the end of the heel and makes contact with the walking surface. A heel-lift can be used on a wide variety of shoes, including men's shoes. A dowel-lift is a heel-lift used on women's shoes having at lest a slightly elevated heel. The dowel-lift is molded around a pin or dowel. Typically, the dowel is metal. The dowel projects outward and upward from the dowel-lift. The dowel is driven into the bottom of the heel of the shoe.

For the comfort and safety of the wearer, it is important that the heel-lift have good cushioning and non-slip characteristics. The heel lift should also have good wear characteristics to extend the life of the shoe.

### Background Art

Prior art dowel-lifts are constructed of a metal dowel and a material having a single hardness, typically a hard thermoplastic polyurethane resin. The hard thermoplastic polyurethane dowel-lift caps off the main portion of the heel of the shoe and prevents that portion from being destroyed during normal use.

Hard thermoplastic polyurethane dowel-lifts have several drawbacks. First, the hard thermoplastic polyurethane dowel-lift creates a loud noise when striking a hard walking surface, thereby causing embarrassment to wearers. Moreover, the hard thermoplastic polyurethane has inferior non-slip characteristics. Such inferior non-slip characteristics can result in accidents with injury to the user. Shoe manufacturers have been, and continue to be, involved in numerous lawsuits for damages due to such injuries. Finally, the hard thermoplastic polyurethane has poor wear resistance. Generally, persons in the industry accept that dowel-lifts frequently will need replacement due to wear. In fact, it is a common practice in the industry to include a replacement set of dowel-lifts in the original shoe box so that the woman can replace the dowel lift when worn out.

Another problem with the conventional hard thermoplastic polyurethane has been the undesired disengagement of the polyurethane from the metal dowel. Such disengagement can occur when the user pivots on the heel.

Persons in this art have accepted the inferior product because of supposed molding constraints. Persons looked only to conventional hard materials which could be injection molded around a metal dowel. For that reason they accepted the inferior performance characteristics of the hard thermoplastic polyurethane dowel-lifts. The use of the hard material insured that the material adhered to the dowel. It was generally believed that other materials would be inappropriate. Other materials could be difficult to adhere to the metal dowel which was driven into the bottom of the heel.

DE-U-8 807 616 comprises a dowel extending completely through the heel lift having a first an a second polyurethane portion formed on its end, wherein said second portion has an ultimate Shore A Hardness which is lower than the ultimate Shore A Hardness of said first portion.

Accordingly, it is an object of the invention to provide a new dowel-lift which has better performance characteristics than the prior dowel-lifts. It is a specific object of the invention to provide a quieter dowel-lift with better non-slip and wear characteristics.

A further object of the invention is to provide a dowel-lift which possesses a higher degree of heel strike shock absorbency and improved rebound resiliency.

Another object of the invention is to provide an inexpensive and structurally sound dowel-lift with superior performance characteristics.

A further object of the invention is to provide a dowel-lift having a hard portion and a soft portion which are secured together without the use of an adhesive between the two portions.

An additional object is to provide a dowel-lift with better adhesion of the polyurethane material to the dowel pin.

According to the present invention there is provided a dowel lift for a shoe, the dowel lift comprising a dowel, a first polyurethane portion formed on an end of said dowel and a second polyurethane portion formed on the outer surface of said first portion before said first portion has completely cured thus providing direct bonding of at least a part of the material of the first portion and a part of the material of the second portion wherein said second portion has an ultimate Shore A Hardness which is lower than the ultimate Shore A Hardness of said first portion.

The unique dual hardness heel-lift overcomes the drawbacks of prior art shoes. It provides a dowel-lift which is quieter, more wear resistant and has better non-slip characteristics. However, the dual hardness heel-lift does not sacrifice the benefits of the conventional polyurethane top-lifts.

Applicant's invention involves securing a softer material, such as a thermoset polyurethane elastomer or a softer thermoplastic polyurethane, to a harder material. The harder material can be the thermoplastic polyurethane of a conventional dowel-lift, or a hard thermoset polyurethane elastomer.

The present improvement concerns securing the softer material directly to the hard material without the use of an adhesive. The hard polyurethane material is molded to a metal dowel pin. The softer thermoset material is then cast onto the hard material. Preferably, a thermoset material is used for the hard material. After the hard thermoset polyurethane material partially gels, but before it is completely cured, the softer thermoset material is cast onto the hard material. This process avoids the use of an adhesive. It also reduces production time as a manufacturer need not wait for the thermoset material to completely harden to add an adhesive before adhering the cast thermoset cover.

The harder portion secures better to the dowel pin than the softer material would secure. The softer portion of the dowel-lift has better performance characteristics than the hard polyurethane. The softer thermoset polyurethane elastomer is quieter than the hard polyurethane. The elastomer also has better non-slip characteristics and a better wear rate, and provides better cushion. The thermoset polyurethane elastomer is generally preferred over other materials because of its superior performance characteristics.

### Brief Description of the Drawings

For a more complete understanding of this invention reference should now be had to the preferred embodiments illustrated in greater detail in the accompanying drawings and described below by any examples of the invention. In the drawings:
FIG. 1 is a perspective view of a shoe incorporating the present invention.
FIG. 2 is a partial cross-section of a heel-lift along a line equivalent to that indicated as line 2-2 of FIG. 1 showing a construction which is not part of the invention.
FIG. 3 is a partial cross-section showing a cast thermoset polyurethane elastomer bonded directly to a metal dowel driven into the heel of the shoe which is not part of the invention.
FIG. 4 is a plastic dowel.
FIG. 5 is an embodiment of the dowel-lift of our invention using a top piece which is a specially molded hard thermoplastic polyurethane portion.
FIG. 6 is a cross-section of line 6-6 of FIG. 3.
FIG. 7 is a partial cross-sectional view of another embodiment of the dowel-lift of our invention.
FIG. 8 is a cross-sectional view of a mold used for making the dowel lift of FIG. 7.
FIG. 9 is a side view of a snap-on heel of this invention.
FIG. 10 is a top view of the heel-lift of FIG. 9.
FIG. 11 is a side view of another snap-on heel-lift of this invention.
FIG. 12 is a top view of the heel-lift of FIG. 11.

While the invention will be described in connection with the preferred embodiments, it will be understood that is not intended to limit the invention to that embodiment. On the contrary, it is intended to cover all alternatives, modifications and equivalents that may be included within the scope of the invention as defined by the appended claims.

### Modes for Carrying Out the Invention

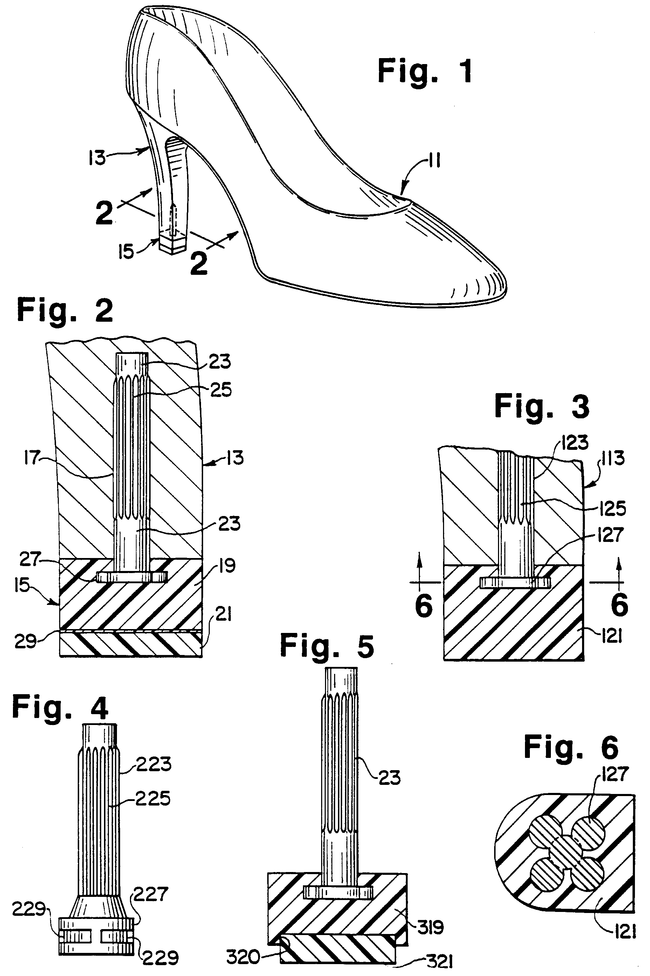

Turning first to FIG. 1, there is shown a perspective view of a shoe 11 constructed in accordance with one embodiment of this invention. The shoe includes a high-heel portion 13 with a dowel-lift 15 at the bottom of the heel.

FIG. 2 illustrates a construction, which is not part of the invention on an enlarged scale. The dowel-lift 15 includes a metal dowel or pin 17, a molded first piece 19 at the top and a second piece 21 at the bottom.

The metal dowel 17 is substantially cylindrical in shape. It includes a shaft section 23. The shaft section 23 includes a series of grooves 25. The grooves 25 grip the heel 13 when the dowel 17 is driven into the heel. The bottom of the dowel 17 includes a horizontal flanged portion 27.

The metal dowel should be prepared prior to molding the first piece 19 into the dowel. Preparation of the metal can include a grit blast or a sand blast. One also can wash the dowel with a suitable solvent. One can then apply a suitable adhesive to the dowel. The adhesive should be one that bonds a thermoset polyurethane or thermoplastic polyurethane, if applicable, to metal substrates. Many such suitable adhesives are known and available. The adhesive is applied to the flanged portion 27 and the bottom of shaft section 23 which will be surrounded by the first piece 19. Such an adhesive improves the adherence of the first piece 19 to the metal dowel. Improving the adherence of the first piece 19 allows one to use a somewhat softer material for the first piece. 19.

The first piece 19 is made from a hard polyurethane material. The first piece 19 is molded around the bottom of the dowel 17 by a conventional injection molding technique. Alternatively, one could cast the material. The first piece completely surrounds the flange 27. The flange 27 and the adhesive thus operate to support the first piece 19 on the dowel. The first piece 19 can be made from a conventional hard thermoplastic polyurethane material. These hard thermoplastic polyurethane materials are well-known and are commonly used for women's dowel-lifts. These materials possess ultimate hardness values greater than or equal to 96, and typically about 100 or more, as measured by the Shore A Hardness test. The "ultimate hardness" is hardness which the material achieves after is has completely solidified, set and cured. The materials typically possess ultimate hardness values of about 50-70 by Shore D Hardness test.

Alternatively, the first piece 19 can be made from a cast thermoset polyurethane. The material possesses an ultimate Shore A Hardness of greater than or equal to 96, and preferably 97. The cast thermoset polyurethane materials are readily available in the industry and are described below with respect to the second piece 21.

The second piece 21 is softer than the first piece 19. The material possesses an ultimate hardness value less than 100 as measured by the Shore A Hardness test. The Shore A Hardness values are preferably less than 96, and most preferably less than 93. The Shore A Hardness of the second piece 21 is preferably greater than 79, and most preferably greater than 82. The most preferred Shore A Hardness is about 92 for the second piece 21.

The material for the second piece 21 further possesses a rebound resilience of greater than 40%, and most preferably greater than 50.0%. The rebound resilience is measured by the ASTM test procedure "Resilience by Vertical Rebound," D-2632-88.

The material for the second piece 21 also possesses superior abrasion properties. The NBS Abrasion test provides measurement of abrasion properties. The NBS Abrasion test is ASTM procedure D1630, RMA HS-2. As measured by that procedure, the material possesses a NBS Abrasion greater than 350, and most preferably between 390 and 480.

The second piece 21 is preferably made from a cast thermoset polyurethane elastomer. The thermoset polyurethane elastomer materials are readily available in the industry. Such material can be made by mixing a polyisocyanate with a polyol, such as a polyhydric polyether, and a curative. A typical curative could be a diamine curative. The term polyurethane elastomer would include polyurethane having polyurea. A typical material which one could use is an elastomer product sold under the tradename Vulkollan by Mobay Corporation. Mobay Corporation is a Bayer U.S.A. Inc. company with offices in Pittsburgh, Pennsylvania.

Vulkollan is a polyurethane elastomer based on special polyesters, 1,5-naphthalene diisocyanate, and glycol extenders. Vulkollan has outstanding wear resistance and excellent tear strength and tear propagation. The Vulkollan elastomer material has properties which are advantageous for the use of this invention. Vulkollan is sold in different grades. The grades 18, 25 and 27 are among those useful for practicing this invention. The NBS Abrasion ranges between 390 and 470 for these grades. The Shore A Hardness ranges between 81 and 93 and the rebound resilience is greater than 50% for these grades. The material is obtained in sheets, which are then cut into appropriate shapes to match the bottom of the conventional hard first piece 19 of the dowel-lift.

The second piece 21 could be made from other materials. However, the materials must be softer than the conventional hard first piece 19. For example, a thermoplastic polyurethane having Shore A Hardness less than 100 could be utilized. The soft thermoplastic polyurethane can be made from the reaction of an isocyanate with either a polyester polyol or a polyether polyol. One can use an isocyanate such as methylenediphenyl isocyanate or tolylene diisocyanate.

The second piece 21 is thin. The piece is generally less than about 4 millimeters in vertical height. Preferably, the material is less than or equal to 2.5 millimeters in height. The embodiment shown in FIG. 3 is about 2 millimeters in height. The first piece 19 is about 4 millimeters in height in the embodiment of FIG. 2.

It is known to secure the second piece 21 to the hard first piece 19 by an adhesive 29. The adhesive 29 should be an adhesive which is suitable for bonding plastics and elastomers. A suitable product would be a cyanoacrylate product. One such product is sold under the designation PX-5 by Pacer Technologies, 1600 Dell Ave., Campbell, California. The material has quick bonding properties which is desirable for this application. In addition, the adhesive securely adheres the elastomer to the thermoplastic. Another suitable glue is sold by Pacer under the designation E-40. In addition, the glue sold by Borden under the trade name of Elmer's Wonderbond Plus is suitable for this application. These adhesives securely bond the elastomer piece 21 to the thermoplastic 19.

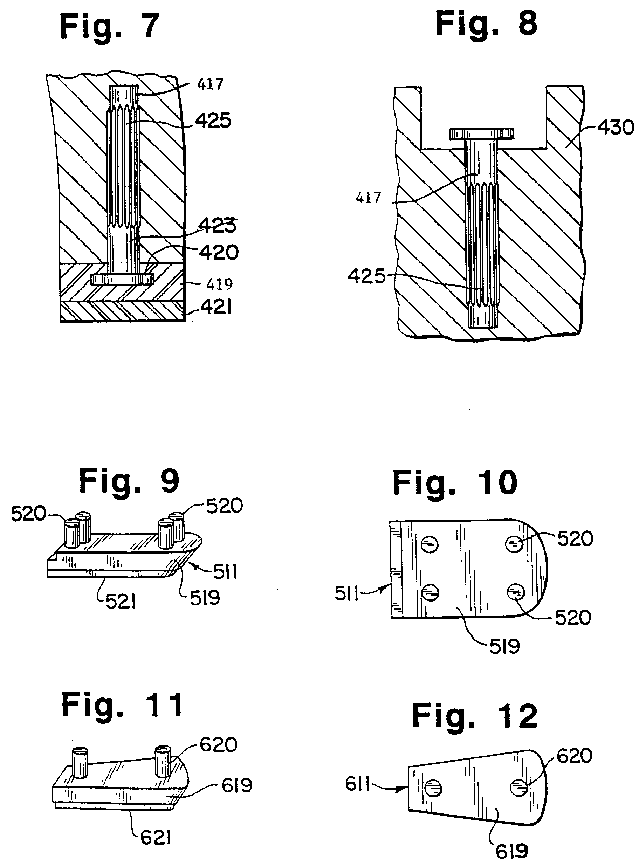

FIG.7 shows an embodiment of this invention. This embodiment secures the soft second piece 421 directly to the hard piece 419 without the use of an adhesive 420 between the hard polyurethane material 419 and the soft polyurethane 421. There are no auxiliary fastening means between the first piece and the second piece, such as an adhesive, a nail or other means.

As shown in FIG. 7 and 8, the hard piece 419 is molded to metal dowel 417 in mold 430. The hard piece 419 embodiment in FIGS. 7 and 8 utilizes a cast thermoset polyurethane material having an ultimate hardness of 97. The dowel has been prepared by sand blasting it and then applying an adhesive 420 which bonds thermoset polyurethane materials to metal substrates. The hard thermoset polyurethane is allowed to achieve an adequate partial gel, but not completely cure. By adequate partial gel, we mean that the material will harden to less than 80% of its ultimate hardness as measured by the Shore A Hardness, and preferably between about 40 to 60% of its ultimate hardness. This partial gel typically occurs within three to ten minutes. However, one can add a catalyst so that the material achieves the partial gel within a much shorter time.

When the hard thermoset material 419 has reached its adequate partial gel, the thermoset polyurethane 421 is added to the mold 430. Thus, the second piece 421 is cast onto the surface of the partially gelled first piece 419. The second piece 421 bonds directly to the surface of the first piece 419. Thus, the entire top surface of second piece 421 directly contacts substantially the entire bottom surface of first piece 419.

The embodiment of FIGS. 7 and 8 requires use of a thermoset polyurethane material which is cast. Thus, one cannot use pre-made sheets of materials as used in the embodiment of FIG. 2. One can obtain suitable polyurethane molds and starting materials, such as polyisocyanates, polyols, and curatives, through polyurethane molders in the industry. One such mold is Flexible Industries of Burlington, Iowa.

After the elastomer second piece 421 is secured to the first piece 419 to complete the dowel-lift, the dowel 417 is driven into the bottom of the heel. This dowel-lift results in a quieter shoe with better wear characteristics and non-slip characteristics.

The first piece 419 also could be an injection molded thermoplastic polyurethane with an ultimate Shore A Hardness of about 100. The first piece 419 is injection molded onto the dowel 417. One surface of the first piece 419 is then prepared by abrading the surface or applying a solvent. The first piece 419 is then transferred to a second mold where the thermoset polyurethane elastomer 421 is cast onto the prepared surface of the first piece 419.

FIGS. 9-12 show embodiments which do not utilize adhesive between the hard material and the soft material and which does not include a dowel. FIGS. 9 and 10 show a snap-on heel-lift 511 for use in women's shoes. The top piece 519 is a molded piece. The top piece 519 includes four molded legs 520. The top piece 519 and the four legs 520 are made from a material having a Shore Hardness value of 96 or greater. Preferably the material is cast thermoset polyurethane elastomer. The bottom piece 521 has Shore Hardness value of less than 96, preferably 92. The bottom piece 521 is preferably made from a cast thermoset polyurethane elastomer. FIGS. 11 and 12 show a similar snap-on heel-lift having a top piece 619 with two molded legs 620 and having a bottom piece 621.

The bottom piece 521 of Figs. 9 and 10 is made in the same mold as the top piece 519. The material for the bottom piece 521 is added to the mold after the material for the top piece 521 has partially gelled, but before it has completely cured. The snap-on heel-lift 511 is fastened to the underside of the shoe by inserting the four legs 520 into accommodating holes in the shoe with an adhesive.

FIG. 5 shows an alternative embodiment of the dowel-lift shown in FIG. 2. FIG. 5 includes the same metal pin 23 as that shown in FIG. 2. It includes a specially molded first piece 319. The first piece 319 is made from the same hard polyurethane as that used in first piece 19 in the embodiment of FIG. 2. However, the material is injection molded into a special shape. The first piece 319 includes an indentation or hole 320. The hole 320 accommodates the second piece 321. This results in a more secure adherement of the thermoset elastomer piece. The surface area of the hole 320 covers over 50% of the surface area of the bottom side of the first piece 319. This relatively large size allows one to use a large second piece 321, which is preferable because a smaller piece would have poorer wear and non-slip characteristics.

FIG. 3 shows another embodiment which is not part of the invention. FIG. 3 shows a heel 113 and a dowel 123. The dowel 123 has grooves 125 and a flange section 127. As shown in FIG. 6, the flange 127 of FIG. 3 has a special shape in cross-section. FIG. 6 shows the flange 127 of metal pin 123 in cross-sectional line along line 6-6 of FIG. 3. As shown in FIG. 6 the flange has a substantially four-leaf clover shape in cross-section. The flanges could have such a clover-shape, a disc-shape, or some other conventional shape which has sufficient surface area on the protruding flange to secure the elastomer section to the pin. Alternatively, one could use a four-leaf flange as on FIG. 6 with one leaf modified by lengthening the leaf to provide a more secure lever.

The embodiment of FIG. 3 differs from the embodiment of FIGS. 1, 2 and 5 in an important aspect. This embodiment does not utilize the hard thermoplastic polyurethane first piece 19. A cast thermoset polyurethane elastomer piece 121 is adhered directly to the bottom of the metal dowel 123. The metal dowel 123 is first prepared with blasting, a solvent wash and application of an adhesive at the flange and bottom of the shaft of the dowel pin. The molding results by pouring the elastomer directly around the bottom of the dowel in a mold. The elastomer material is the same as that described above with respect to the embodiment shown in FIG. 2. The dowel 123 is then driven into the heel 113 of the shoe.

FIG. 4 shows an alternative plastic dowel for use in this invention. The dowel is injection molded. One could use materials such as polyurethanes, glass-filled nylons, or polycarbonates to make the dowel. The elastomer dowel-lift is molded directly to the bottom of the plastic pin. The dowel 223 of FIG. 4 includes grooves 225 and a flange section 227. The flange section 227 includes indentations 229 for better securement of the elastomer to the dowel.

From the foregoing, it will be seen that there has been brought to the art a new and improved shoe which overcomes many of the drawbacks and problems of the prior art. In particular, the shoe of the invention provides a dowel-lift which is softer. Therefore this shoe invention provides a quieter shoe as the heel strikes the walking surface. The dowel-lift is also more wear resistant and has better non-slip characteristics.

The dowel-lift of this invention is most preferably used in women's heeled shoes. Such women's shoes have heels typically equal to or greater than one inch in height. Women's formal dress shoes are typically two inches or greater. Preferably, the dowel-lift of this invention is used on heels which are equal to or less than 1.0 sq. in. in horizontal cross-section at the narrowest portion of the heel. The dowel-lifts are more preferably used on heeled shoes which are less than 370mm² (0.57 in²), and most preferably less than 170mm² (0.26 in²), at that cross section of the heel.

While the preferred embodiments of the invention have been shown, it will be understood, of course, that the invention is not limited thereto since modifications may be made by those skilled in the art, particularly in light of the foregoing teachings. It is, therefore, contemplated by the appended claims to cover any such modifications as incorporate those features which constitute the essential features of these improvements within the scope of the invention as defined in the appended claims.

## Claims

1. A dowel lift for a shoe, the dowel lift comprising a dowel (417), a first polyurethane portion (419) formed on an end of said dowel (417) and a second polyurethane portion (421) formed on the outer surface of said first portion (419) before said first portion has completely cured thus providing direct bonding of at least a part of the material of the first portion and a part of the material of the second portion wherein said second portion has an ultimate Shore A Hardness which is lower than the ultimate Shore A Hardness of said first portion.

2. A dowel lift according to claim 1 wherein said first portion (419) has a Shore A Hardness at least 4 greater than said second portion 421.

3. A dowel lift according to claim 1 or claim 2 wherein said second portion (421) has a Shore A Hardness less than 96.

4. A dowel lift according to claim 1 or claim 2, wherein said second portion (421) has a Shore A Hardness between 81 and 93 and said first portion has a Shore A Hardness not less than 96.

5. A dowel lift according to any preceding claim wherein said second portion (421) is a thermoset polyurethane elastomer.

6. A dowel lift according to any preceding claim wherein said second portion (421) is not greater than 2.5mm thick.

7. A dowel lift according to any preceding claim wherein the second portion (421) is recessed in the first portion 419.

8. A shoe incorporating a dowel lift according to any preceding claim.

9. The shoe of claim 8 having a heel not less than 50mm in height.

10. The shoe of claim 8 or claim 9 wherein a horizontal cross-section of the heel at its narrowest part is not greater than 650mm² .

11. The shoe of claim 10 wherein said horizontal cross-section at its narrowest part is less than 170mm² .

12. A dowel lift according to any preceding claim 1-7 wherein said second portion is formed on the outer surface of said first portion before said first portion has hardened to 80% of its ultimate hardness.

13. A dowel lift according to any preceding claim 1-7, 12 wherein said second portion is formed on the outer surface of said first portion when said first portion has hardened to between 40% and 60% of its ultimate hardness.

## Patentansprüche

1. Stift-Absatzfleck für einen Schuh, enthaltend einen Stift (417), einen ersten Polyurethanbereich (419), welcher an einem Ende des Stifts (417) aufgebildet ist, und einen zweiten Polyurethanbereich (421), welcher auf die äußere Oberfläche des ersten Bereichs (419) aufgebildet wird, bevor der erste Bereich vollständig ausgehärtet ist, womit eine direkte Verbindung von wenigstens einem Teil des Materials des ersten Bereichs mit einem Teil des Materials des zweiten Bereichs hergestellt wird, wobei der zweite Bereich eine endgültige Shore-A-Härte besitzt, die geringer als die endgültige Shore-A-Härte des ersten Bereichs ist.

2. Stift-Absatzfleck gemäß Anspruch 1, wobei der erste Bereich (419) eine Shore-A-Härte besitzt, die um wenigstens 4 größer ist als die des zweiten Bereichs (421).

3. Stift-Absatzfleck gemäß Anspruch 1 und/oder 2, wobei der zweite Bereich (421) eine Shore-A-Härte unter 96 besitzt.

4. Stift-Absatzfleck gemäß Anspruch 1 und/oder 2, wobei der zweite Bereich (421) eine Shore-A-Härte zwischen 81 und 93 und der erste Bereich eine Shore-A-Härte von nicht weniger als 96 besitzt.

5. Stift-Absatzfleck nach mindestens einem der vorhergehenden Ansprüche, wobei der zweite Bereich (421) ein Thermoset-Polyurethan-Elastomer ist.

6. Stift-Absatzfleck nach mindestens einem der vorhergehenden Ansprüche, wobei der zweite Bereich (421) nicht dicker als 2,5 mm ist.

7. Stift-Absatzfleck nach mindestens einem der vorhergehenden Ansprüche, wobei der zweite Bereich (421) in den ersten Bereich (419) eingelassen ist.

8. Schuh, enthaltend einen Stift-Absatzfleck nach mindestens einem der vorhergehenden Ansprüche.

9. Schuh gemäß Anspruch 8 mit einem Absatz von nicht weniger als 50 mm Höhe.

10. Schuh gemäß Anspruch 8 und/oder 9, wobei ein horizontaler Querschnitt des Absatzes in seinem engsten Bereich nicht größer als 650 mm² ist.

11. Schuh gemäß Anspruch 10, wobei der horizontale Querschnitt in seinem engsten Bereich weniger als 170 mm² beträgt.

12. Stift-Absatzfleck nach mindestens einem der vorhergehenden Ansprüche 1 bis 7, wobei der zweite Bereich auf die äußere Oberfläche des ersten Bereichs aufgebildet wird, bevor der erste Bereich zu 80 % seiner endgültigen Härte ausgehärtet ist.

13. Stift-Absatzfleck nach mindestens einem der vorhergehenden Ansprüche 1 bis 7, 12, wobei der zweite Bereich auf die äußere Oberfläche des ersten Bereichs aufgebildet wird, wenn der erste Bereich zu 40 bis 60 % seiner endgültigen Härte ausgehärtet ist.

## Revendications

1. Goujon de rehaussement pour chaussure, le goujon de rehaussement comprenant un goujon (417), une première partie en polyuréthane (419) formée sur une extrémité dudit goujon (417) et une seconde partie en polyuréthane (421) formée sur la surface extérieure de ladite première partie (419) avant que ladite première partie ait été complètement vulcanisée, assurant ainsi une liaison directe d'au moins une partie du matériau de la première partie et d'une partie du matériau de la seconde partie, dans lequel ladite seconde partie présente une dureté Shore A finale qui est inférieure à la dureté Shore A finale de ladite première partie.

2. Goujon de rehaussement selon la revendication 1, dans lequel ladite première partie (419) présente une dureté Shore A au moins quatre fois supérieure à celle de ladite seconde partie (421).

3. Goujon de rehaussement selon la revendication 1 ou la revendication 2, dans lequel ladite seconde partie (421) présente une dureté Shore A inférieure à 96.

4. Goujon de rehaussement selon la revendication 1 ou la revendication 2, dans lequel ladite seconde partie (421) présente une dureté Shore A comprise entre 81 et 93 et ladite première partie présente une dureté Shore A qui n'est pas inférieure à 96.

5. Goujon de rehaussement selon l'une quelconque des revendications précédentes, dans lequel ladite seconde partie (421) est constituée par un élastomère de polyuréthane thermodurci.

6. Goujon de rehaussement selon l'une quelconque des revendications précédentes, dans lequel ladite seconde partie (421) n'a pas une épaisseur supérieure à 2,5 mm.

7. Goujon de rehaussement selon l'une quelconque des revendications précédentes, dans lequel ladite seconde partie (421) est encastrée dans la première partie (419).

8. Chaussure incorporant un goujon de rehaussement selon l'une quelconque des revendications précédentes.

9. Chaussure selon la revendication 8 comportant un talon dont la hauteur n'est pas inférieure à 50 mm.

10. Chaussure selon la revendication 8 ou la revendication 9, dans laquelle une section transversale horizontale du talon dans sa partie la plus étroite ne présente pas une surface supérieure à 650 mm².

11. Chaussure selon la revendication 10, dans laquelle ladite section transversale horizontale dans sa partie la plus étroite a une surface inférieure à 170 mm².

12. Goujon de rehaussement selon l'une quelconque des revendications précédentes 1 à 7, dans lequel ladite seconde partie est formée sur la surface externe de ladite première partie avant que ladite première partie n'ait durci jusqu'à atteindre 80 % de sa dureté finale.

13. Goujon de rehaussement selon l'une quelconque des revendications 1 à 7, ou 12, dans lequel ladite seconde partie est formée sur la surface externe de ladite première partie lorsque ladite première partie a atteint une dureté comprise entre 40 % et 60 % de sa dureté finale.
